# EUROPEAN PATENT APPLICATION

(11) **EP 4 588 841 A1**
(43) Date of publication of application: **23.07.2025**
(21) Application number: 24153048.4
(22) Date of filing: 22.01.2024
(51) Int. Cl.: B65G 1/04

(54) **DELIVERY VEHICLE**

(71) Applicant: AUTOSTORE TECHNOLOGY AS, 5578 Nedre Vats (NO)
(72) Inventor: Heggebø, Jørgen, 5578 Nedre Vats (NO)
(74) Representative: Kilburn & Strode LLP

(57) **Abstract**

A delivery vehicle (10) for transporting storage containers (20, 30, 40, 50) in an automated storage and retrieval system (1). The delivery vehicle (10) comprises a vehicle body (11), wheels (13, 14) connected to the vehicle body (11) for running on a rail system (8; 108) and a propulsion system (12) arranged to rotate the wheels (13, 14). The delivery vehicle further comprises a container carrier (15) providing a container compartment (15C) configured to receive the storage container (20, 30, 40, 50). The container carrier (15) comprises vertical wall guides (16) configured to engage the one or more storage containers (30, 40, 50).

## Description

### TECHNICAL FIELD

The present invention relates to a delivery vehicle for transporting one or more storage containers in an automated storage and retrieval system. The present invention also relates to an automated storage and retrieval system comprising such a delivery vehicle.

### BACKGROUND

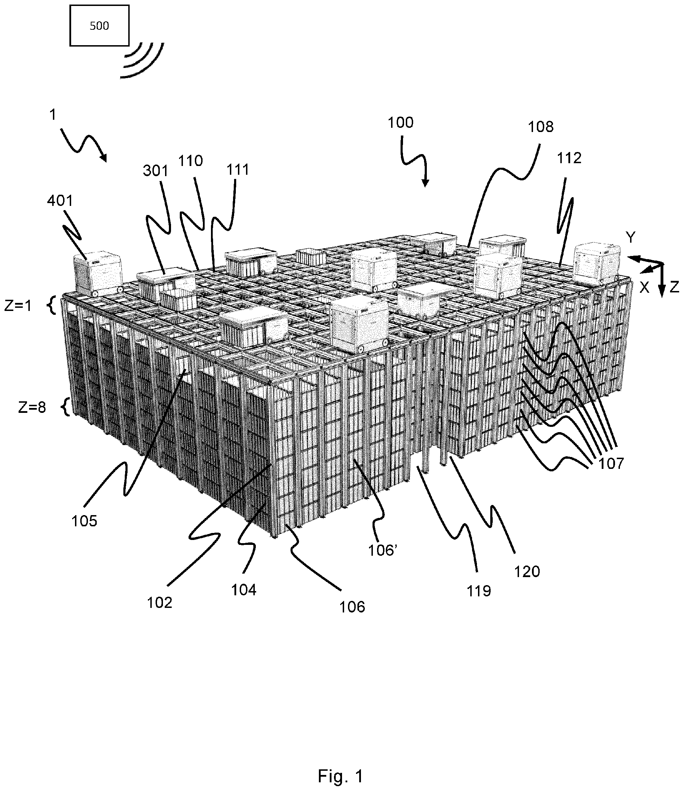

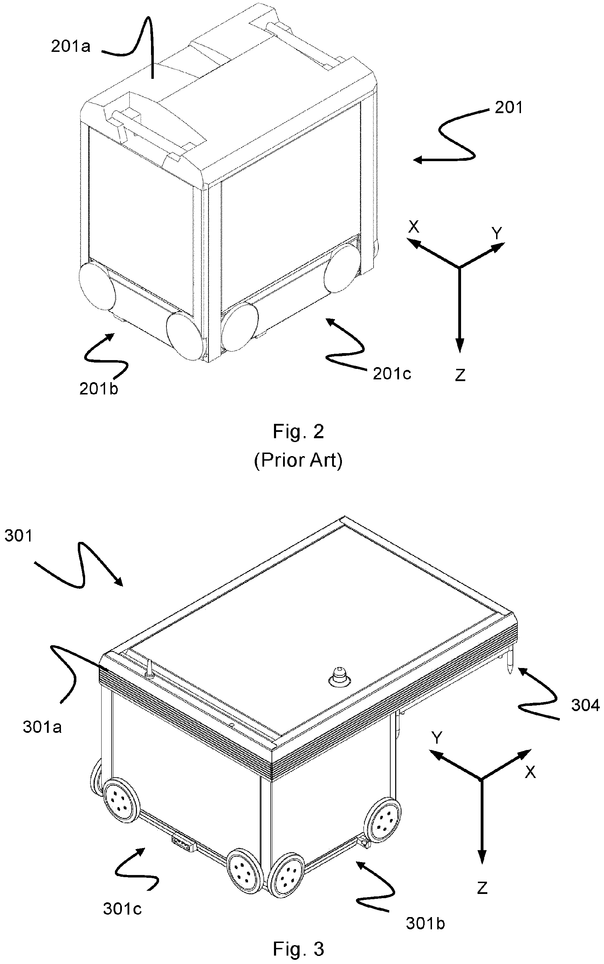

Fig. 1 discloses a prior art automated storage and retrieval system 1 with a framework structure 100 and Figs. 2, 3 and 4 disclose three different prior art container handling vehicles 201,301,401 suitable for operating on such a system 1.

The framework structure 100 comprises upright members 102 and a storage volume comprising storage columns 105 arranged in rows between the upright members 102. In these storage columns 105 storage containers 106, also known as bins, are stacked one on top of one another to form stacks 107. The members 102 may typically be made of metal, e.g. extruded aluminum profiles.

The framework structure 100 of the automated storage and retrieval system 1 comprises a rail system 108 arranged across the top of framework structure 100, on which rail system 108 a plurality of container handling vehicles 201,301,401 may be operated to raise storage containers 106 from, and lower storage containers 106 into, the storage columns 105, and also to transport the storage containers 106 above the storage columns 105. The rail system 108 comprises a first set of parallel rails 110 arranged to guide movement of the container handling vehicles 201,301,401 in a first direction X across the top of the frame structure 100, and a second set of parallel rails 111 arranged perpendicular to the first set of rails 110 to guide movement of the container handling vehicles 201,301,401 in a second direction Y which is perpendicular to the first direction X. Containers 106 stored in the columns 105 are accessed by the container handling vehicles 201,301,401 through access openings 112 in the rail system 108. The container handling vehicles 201,301,401 can move laterally above the storage columns 105, i.e. in a plane which is parallel to the horizontal X-Y plane.

The upright members 102 of the framework structure 100 may be used to guide the storage containers during raising of the containers out from and lowering of the containers into the columns 105. The stacks 107 of containers 106 are typically self-supporting.

Each prior art container handling vehicle 201,301,401 comprises a vehicle body 201a,301a,401a and first and second sets of wheels 201b, 201c, 301b, 301c,401b,401c which enable the lateral movement of the container handling vehicles 201,301,401 in the X direction and in the Y direction, respectively. In Figs. 2, 3 and 4 two wheels in each set are fully visible. The first set of wheels 201b,301b,401b is arranged to engage with two adjacent rails of the first set 110 of rails, and the second set of wheels 201c,301c,401c is arranged to engage with two adjacent rails of the second set 111 of rails. At least one of the sets of wheels 201b, 201c, 301b,301c,401b,401c can be lifted and lowered, so that the first set of wheels 201b,301b,401b and/or the second set of wheels 201c,301c,401c can be engaged with the respective set of rails 110, 111 at any one time.

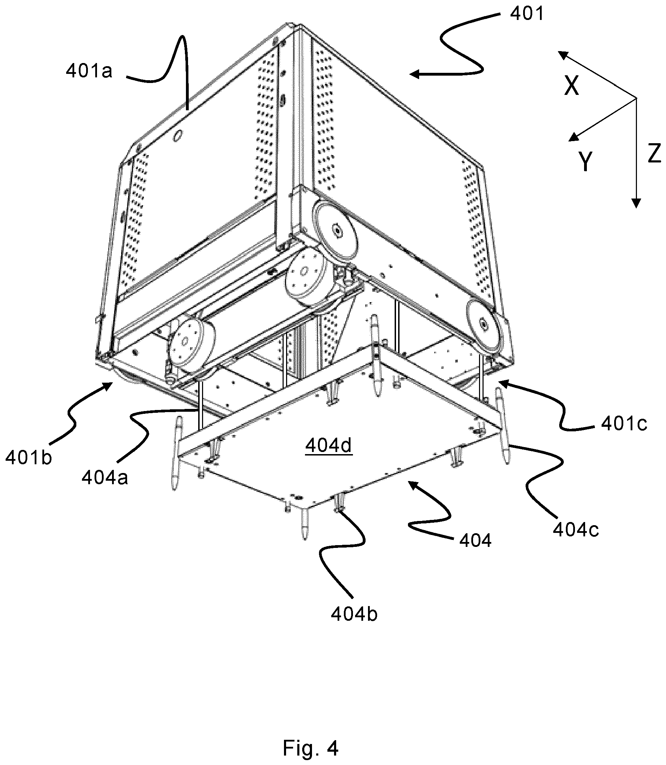

Each prior art container handling vehicle 201,301,401 also comprises a lifting device for vertical transportation of storage containers 106, e.g. raising a storage container 106 from, and lowering a storage container 106 into, a storage column 105. The lifting device comprises one or more gripping / engaging devices which are adapted to engage a storage container 106, and which gripping / engaging devices can be lowered from the vehicle 201,301,401 so that the position of the gripping / engaging devices with respect to the vehicle 201,301,401 can be adjusted in a third direction Z which is orthogonal the first direction *X* and the second direction *Y.* Parts of the gripping device of the container handling vehicles 301,401 are shown in Figs. 3 and 4 indicated with reference number 304,404. The gripping device of the container handling device 201 is located within the vehicle body 201a in Fig. 2 and is thus not shown.

Conventionally, and also for the purpose of this application, *Z*=1 identifies the uppermost layer available for storage containers below the rails 110,111, i.e. the layer immediately below the rail system 108, *Z*=2 the second layer below the rail system 108, *Z*=3 the third layer etc. In the exemplary prior art disclosed in Fig. 1, *Z*=8 identifies the lowermost, bottom layer of storage containers. Similarly, *X*=1...*n* and *Y*=1...*n* identifies the position of each storage column 105 in the horizontal plane. Consequently, as an example, and using the Cartesian coordinate system *X, Y, Z* indicated in Fig. 1, the storage container identified as 106' in Fig. 1 can be said to occupy storage position *X*=17, *Y*=1, *Z*=6. The container handling vehicles 201,301,401 can be said to travel in layer Z=0, and each storage column 105 can be identified by its *X* and *Y* coordinates. Thus, the storage containers shown in Fig. 1 extending above the rail system 108 are also said to be arranged in layer Z=0.

The storage volume of the framework structure 100 has often been referred to as a grid 104, where the possible storage positions within this grid are referred to as storage cells. Each storage column may be identified by a position in an *X-* and *Y-*direction, while each storage cell may be identified by a container number in the X-, Y- and Z-direction.

Each prior art container handling vehicle 201,301,401 comprises a storage compartment or space for receiving and stowing a storage container 106 when transporting the storage container 106 across the rail system 108. The storage space may comprise a cavity arranged internally within the vehicle body 201a,401a as shown in Figs. 2 and 4 and as described in e.g. WO2O15/193278A1 and WO2019/206487A1, the contents of which are incorporated herein by reference.

Fig. 3 shows an alternative configuration of a container handling vehicle 301 with a cantilever construction. Such a vehicle is described in detail in e.g. NO317366, the contents of which are also incorporated herein by reference.

The cavity container handling vehicle 201 shown in Fig. 2 may have a footprint that covers an area with dimensions in the X and Y directions which is generally equal to the lateral extent of a storage column 105, e.g. as is described in WO2015/193278A1, the contents of which are incorporated herein by reference. The term 'lateral' used herein may mean 'horizontal'.

Alternatively, the cavity container handling vehicles 401 may have a footprint which is larger than the lateral area defined by a storage column 105 as shown in Fig. 1 and 4, e.g. as is disclosed in WO2014/090684A1 or WO2019/206487A1.

The rail system 108 typically comprises rails with grooves in which the wheels of the vehicles run. Alternatively, the rails may comprise upwardly protruding elements, where the wheels of the vehicles comprise flanges to prevent derailing. These grooves and upwardly protruding elements are collectively known as tracks. Each rail may comprise one track, or each rail 110,111 may comprise two parallel tracks. In other rail systems 108, each rail in one direction (e.g. an X direction) may comprise one track and each rail in the other, perpendicular direction (e.g. a Y direction) may comprise two tracks. Each rail 110,111 may also comprise two track members that are fastened together, each track member providing one of a pair of tracks provided by each rail.

WO2018/146304A1, the contents of which are incorporated herein by reference, illustrates a typical configuration of rail system 108 comprising rails and parallel tracks in both *X* and *Y* directions.

In the framework structure 100, a majority of the columns are storage columns 105, i.e. columns 105 where storage containers 106 are stored in stacks 107. In addition to storage columns 105, there are special-purpose columns within the framework structure. In Fig. 1, columns 119 and 120 are such special-purpose columns used by the container handling vehicles 201,301,401 to drop off and/or pick up storage containers 106 so that they can be transported to an access station (not shown) where the storage containers 106 can be accessed from outside of the framework structure 100 or transferred out of or into the framework structure 100. Within the art, such a location is normally referred to as a 'port' and the column in which the port is located may be referred to as a 'port column' 119,120. The transportation to the access station may be in any direction, that is horizontal, tilted and/or vertical. For example, the storage containers 106 may be placed in a random or dedicated column 105 within the framework structure 100, then picked up by any container handling vehicle and transported to a port column 119,120 for further transportation to an access station. The transportation from the port to the access station may require movement along various different directions, by means such as delivery vehicles, trolleys or other transportation lines. Note that the term 'tilted' means transportation of storage containers 106 having a general transportation orientation somewhere between horizontal and vertical.

In Fig. 1, the first port column 119 may for example be a dedicated drop-off port column where the container handling vehicles 201,301,401 can drop off storage containers 106 to be transported to an access or a transfer station, and the second port column 120 may be a dedicated pick-up port column where the container handling vehicles 201,301,401 can pick up storage containers 106 that have been transported from an access or a transfer station.

The access station may typically be a picking or a stocking station where product items are removed from or positioned into the storage containers 106. In a picking or a stocking station, the storage containers 106 are normally not removed from the automated storage and retrieval system 1, but are returned into the framework structure 100 again once accessed. A port can also be used for transferring storage containers to another storage facility (e.g. to another framework structure or to another automated storage and retrieval system), to a transport vehicle (e.g. a train or a lorry), or to a production facility.

A conveyor system comprising conveyors is normally employed to transport the storage containers between the port columns 119,120 and the access station.

If the port columns 119,120 and the access station are located at different levels, the conveyor system may comprise a lift device with a vertical component for transporting the storage containers 106 vertically between the port column 119,120 and the access station.

The conveyor system may be arranged to transfer storage containers 106 between different framework structures, e.g. as is described in WO2014/075937A1, the contents of which are incorporated herein by reference.

When a storage container 106 stored in one of the columns 105 disclosed in Fig. 1 is to be accessed, one of the container handling vehicles 201,301,401 is instructed to retrieve the target storage container 106 from its position and transport it to the drop-off port column 119. This operation involves moving the container handling vehicle 201,301,401 to a location above the storage column 105 in which the target storage container 106 is positioned, retrieving the storage container 106 from the storage column 105 using the container handling vehicle's 201,301,401 lifting device (not shown), and transporting the storage container 106 to the drop-off port column 119. If the target storage container 106 is located deep within a stack 107, i.e. with one or a plurality of other storage containers 106 positioned above the target storage container 106, the operation also involves temporarily moving the abovepositioned storage containers prior to lifting the target storage container 106 from the storage column 105. This step, which is sometimes referred to as "digging" within the art, may be performed with the same container handling vehicle that is subsequently used for transporting the target storage container to the drop-off port column 119, or with one or a plurality of other cooperating container handling vehicles. Alternatively, or in addition, the automated storage and retrieval system 1 may have container handling vehicles 201,301,401 specifically dedicated to the task of temporarily removing storage containers 106 from a storage column 105. Once the target storage container 106 has been removed from the storage column 105, the temporarily removed storage containers 106 can be repositioned into the original storage column 105. However, the removed storage containers 106 may alternatively be relocated to other storage columns 105.

When a storage container 106 is to be stored in one of the columns 105, one of the container handling vehicles 201,301,401 is instructed to pick up the storage container 106 from the pick-up port column 120 and transport it to a location above the storage column 105 where it is to be stored. After any storage containers 106 positioned at or above the target position within the stack 107 have been removed, the container handling vehicle 201,301,401 positions the storage container 106 at the desired position. The removed storage containers 106 may then be lowered back into the storage column 105, or relocated to other storage columns 105.

For monitoring and controlling the automated storage and retrieval system 1, e.g. monitoring and controlling the location of respective storage containers 106 within the framework structure 100, the content of each storage container 106, and the movement of the container handling vehicles 201,301,401 so that a desired storage container 106 can be delivered to the desired location at the desired time without the container handling vehicles 201,301,401 colliding with each other, the automated storage and retrieval system 1 comprises a control system 500 which typically is computerized and which typically comprises a database for keeping track of the storage containers 106.

WO2015197709 describes an automated storage and retrieval system with load handling devices capable of carrying multiple storage containers of a single gridspacing size or single storage containers of a multiple grid spacings.

WO 2019/101366 describes a container handling vehicle capable of lifting two or four storage containers of the same size simultaneously or individually.

WO 2018/060527 describes a robot capable of lifting four storage containers of the same size simultaneously.

WO 2017/178370 describes several smaller-sized storage containers that can be stacked above other smaller-sized storage containers in various ways.

WO2017211634 shows a gripper which can be operated to lift one or several smaller-sized storage containers from a group of smaller-sized storage containers adjacent to each other.

During picking of a picking order, a storage container is moved from its storage column to an access station where the product is picked from the storage container. The storage container is then returned to one of the storage columns again. The storage container may be moved directly between the container handling vehicle and the access station via one of the vertical columns of the framework structure. Alternatively, the storage container may be moved via a delivery vehicle. Such a delivery vehicle is known from NO 345059.

The present invention seeks to overcome or at least ameliorate to a certain extent, the problems associated with the prior art.

### SUMMARY

According to a first aspect, there is provided a delivery vehicle for transporting storage containers in an automated storage and retrieval system, wherein the delivery vehicle comprises:
- a vehicle body;
- wheels connected to the vehicle body for running on a rail system below the delivery vehicle;
- a propulsion system arranged to rotate the wheels;
   i- a container carrier providing a container compartment configured to receive the storage container;
   wherein the container carrier comprises one or more vertical wall guides configured to engage the one or more storage containers.

Optionally, the one or more vertical wall guides protrude inwardly into the container compartment.

Optionally, the one or more vertical wall guides are configured to engage a vertical corner recess of the storage container and/or to engage a vertical side recess of the storage container.

The container carrier may be defined with a vertical center axis. The vertical wall guides may be protruding inwardly into the container compartment towards the vertical center axis.

In an alternative, the wall guides may be formed as recesses in the container compartment with the storage container having corresponding protrusions for engaging with said recesses.

The engagement between the vertical wall guides and the vertical corner recess of the storage container and/or the engagement between the vertical wall guides and the vertical side recess of the storage container is providing guiding of the storage containers during their vertical movement into or out from the container compartment. The above engagement may also prevent horizontal displacement of the storage containers within the container compartment during movement of the delivery vehicle.

The container carrier may comprise four side walls which may extend vertically above the vehicle body; wherein the one or more vertical wall guides may be provided as part of, or may be connected to, the side walls.

The container carrier may be at least partially integrated with the vehicle body. The container carrier may comprise a base. The base may be a part of the vehicle body. The four side walls may extend vertically above the vehicle body around a perimeter of the vehicle body.

The container carrier may comprise four vertical wall guides, one for each side wall.

The vertical wall guides may be located centrally on each side wall.

The container carrier may comprise a vertical center post extending vertically up into the container compartment.

The vertical center post may be aligned with the central vertical axis of the container compartment.

The vertical center post may have a cross-sectional shape in the form of a cross.

The container compartment may be configured to receive storage containers of different sizes.

The vertical center post may be configured to engage the vertical corner recess of one size of storage containers and/or to engage the vertical side recess of another size of storage containers and/or to engage a guiding aperture of yet another size of storage containers.

The vertical wall guides may be biased into a protruding state, in which the vertical wall guides may be protruding inwardly into the container compartment at a first distance, and a retracted state, in which the vertical wall guides maybe displaced inwardly into the container compartment at a second distance shorter than the first distance.

The second distance may be 0 mm. In this case, each vertical wall guide is aligned with or is flush with the inwardly facing surface of the side wall to which the vertical wall guide is provided as part of, or is connected to, in the retracted state. In this way, with the vertical wall guides retracted, a storage container without recessed may be carried by the delivery vehicle..

The vertical wall guides may be spring-biased towards the protruding state. The vertical wall guides may comprise an upper inclining surface, wherein a storage container without recesses may wedge the vertical wall guides to its retracted state when lowered into the container compartment. The vertical wall guides may be connected to the side wall by means of a spring.

The vertical wall guides may be connected to the side wall by means of an actuator. The actuator may be configured to move the vertical wall guides between the retracted state and the protruding state. The actuator may be controlled by a control system of the delivery vehicle.

The container carrier may comprise vertical corner recesses protruding inwardly into the container compartment; wherein each vertical corner recess may be configured to engage a vertical corner recess of the storage container.

The container compartment may be configured to receive one single first storage container having a footprint corresponding to the horizontal cross section area of the container compartment.

The container compartment may be configured to receive up to two second storage containers or up to two third storage containers, each second storage container and each third storage container having a footprint maybe 45 - 50% of the horizontal cross section area of the container compartment.

The container compartment may be configured to receive up to four fourth storage containers each having a footprint may be 20 - 25% of the horizontal cross section area of the container compartment.

The container compartment may be configured to receive one second storage container and two fourth storage containers. The container compartment may be configured to receive two third storage containers and two fourth storage containers.

The wheels may comprise a first set of wheels for moving the delivery vehicle in a first direction and a second set of wheels for moving the delivery vehicle in a second direction perpendicular to the first direction. The first set of wheels and/or the second set of wheels may be elevated vertically relative to the vehicle body in order to provide that only one set of wheels are in physical contact with the surface below the delivery vehicle. The wheels may be located around a lower portion of the vehicle body. The first set of wheels may comprise four wheels. The second set of wheels may comprise four wheels.

The vehicle body may have a cuboid shape. A height of the vertical wall guides may be shorter than a height of the storage containers.

The propulsion system may comprise a motor for rotating at least some of the wheels. The propulsion system may comprise an actuator elevating the first set of wheels and/or the second set of wheels. The propulsion system may comprise a power supply for powering the motor and/or the actuator. The power supply may be a battery or a capacitor. The propulsion system may comprise a control system for controlling the motor and/or the actuator. At least parts of the propulsion system are located within the vehicle body.

According to a second aspect, there is provided an automated storage and retrieval system comprising a framework structure, wherein the framework structure comprises:
- upright members;
- a storage volume comprising storage columns provided between the upright members; and
- a rail system, wherein the automated storage and retrieval system comprises a delivery vehicle according to any one of the above claims arranged to operate on the rail system, and wherein the automated storage and retrieval system comprises storage containers arranged to be stackable in stacks within the storage columns and arranged to be received within the container compartment of the delivery vehicle.

The rail system may have a first rail system connected to an upper end of the upright members, wherein the delivery vehicle may be configured to operate on the first rail system; and/or the rail system may have a second rail system at a height below the upper end of the upright members, wherein the delivery vehicle may be configured to operate on the second rail system.

The second rail system may be located at least partially within a perimeter of the framework structure. The second rail system may be used for conveying storage containers to access stations, for conveying storage containers between different framework structures.

Lower sections of at least some of the upright members may have a cross sectional area being smaller than the cross sectional area of upper sections of the upright members. The lower rails may be located between such lower sections, thereby allowing the delivery vehicle to move between such upright members.

The automated storage and retrieval system may comprise a container handling vehicle configured to move storage containers between the storage columns and the container compartment of the delivery vehicle.

According to a further aspect, a first storage container may have a generally rectangular base, two long sides and two short sides protruding up from the rectangular base and a long side connection interface provided in a top of its long sides. The storage container may have recesses in its sides or at its corners for engaging with the one or more vertical wall guides. The first storage container may comprise a short side connection interface provided in the top of its short sides.

According to a further aspect, second or third storage containers may each have a generally rectangular base, two long sides and two short sides protruding up from the rectangular base. The storage containers may have recesses in their sides or at their corners for engaging with the one or more vertical wall guides. The container may also have a short side connection interface provided in a top of its two short sides.

The short side connection interfaces of the two second/third storage containers may be functionally identical to the long side connection interface of the first storage container or to the short side connection interface of the first storage container when one of the long sides of a first one of the second/third storage containers is located adjacent to one of the long sides of a second one of the second/third storage containers.

As used herein, the term "functionally identical" is referring to that that the connection interfaces are identical in function as seen from the equipment being used to connect to the connection interfaces. Hence, when one of the long sides of the first one of the second/third storage containers is located adjacent to one of the long sides of the second one of the second/third storage containers, the equipment used to connect to the connection interface may connect to and disconnect from the short side connection interfaces in the same way as it may connect to and disconnect from the long side connection interface of the first storage container or to the short side connection interface of the first storage container.

The short side connection interfaces of the second/third storage containers may be identical to the long side connection interface of the first storage container or to the short side connection interface of the first storage container when one of the long sides of a first one of the second/third storage containers are located adjacent to one of the long sides of a second one of the second/third storage containers and when the first one of the second/third storage containers is similar in size to, or identical in size to, the second one of the second/third storage containers.

The short side connection interfaces and the long side connection interfaces may be provided in an upper surface of a rim at the top of the short sides and long sides of the storage containers. The short side connection interfaces and the long side connection interfaces may comprise a slot provided through this rim. The slot may have an elongated shape. The rim may extend in a direction parallel to the base of the storage container. The rim may extend in a direction parallel to the base of, and away from a center of the storage container. Equipment being used to connect to the connection interfaces may be inserted vertically from above into the slot, wherein the equipment subsequently moves horizontally to engage the underside of the rim. The equipment being used to connect to the connection interfaces may be inserted vertically into the slot and down to a position outside of the long sides and/or outside of the short sides. Hence, the equipment will not be inserted vertically into a storage compartment of the storage container. This storage compartment are defined by the upwardly facing surface of the base and the inwardly facing surfaces of the long sides and the short sides. The storage container has a top opening defined by the periphery of the short sides and the long sides. Items may be inserted into and retrieved from the storage compartment via this top opening.

The short side connection interfaces of the two second storage containers may be functionally identical to the short side connection interface of the first storage container when one of the long sides of a first one of the two second storage containers is located adjacent to one of the long sides of a second one of the two second storage containers.

The second storage container may have a footprint area of 45 - 50% of the first storage container.

As used herein, the term "footprint area" is used to denote the area formed by a projection from above on the ground.

The long side of the first storage container may have a length, referred to as a length of the first storage container. The short side of the first storage container may have a length, referred to as a width of the first storage container.

The long side of the second storage container may have a length, referred to as a length of the second storage container. The short side of the second storage container may have a length, referred to as a width of the second container.

The length of the second storage container may be equal to the length of the first storage container. The width of the second storage container may be 45 - 50% of the width of the first storage container. The second storage container may be referred to as a half-size storage container when compared to the first storage container. The first storage container may be referred to as a full-sized or normalsized storage container.

The short side connection interfaces of the two third storage containers may be functionally identical to the long side connection interface of the first storage container when one of the long sides of a first one of the two third storage containers is located adjacent to one of the long sides of a second one of the two third storage containers.

The third storage container may have a footprint area of 45 - 50% of the first storage container.

The long side of the third storage container may have a length, referred to as a length of the third storage container. The short side of the third storage container may have a length, referred to as a width of the third storage container.

The length of the third storage container may be equal to the width of the first storage container. The width of the third storage container may be being 45 - 50% of the length of the first storage container. The third storage container may therefore also be referred to as a half-size storage container.

The third storage container may comprise a long side connection interface provided in a top of its long sides.

A fourth storage container may comprise a generally rectangular base, two long sides and two short sides protruding up from the rectangular base. The storage container may have recesses in its sides or at its corners for engaging with the one or more vertical wall guides. The fourth storage container may further comprise a short side connection interface provided in a top of its short sides. The short side connection interfaces of two fourth storage containers may be functionally identical to the long side connection interface of the third storage container when one of the long sides of a first one of the two fourth storage containers is located adjacent to one of the long sides of a second one of the two fourth storage containers.

The fourth storage container may have a footprint area of 20 - 25% of the first storage container. The fourth storage container has a footprint area of 45 - 50% of the second storage container. The fourth storage container has a footprint area of 45 - 50% of the third storage container.

The long side of the fourth storage container may have a length, referred to as a length of the fourth storage container. The short side of the fourth storage container may have a length, referred to as a width of the fourth storage container.

The length of the fourth storage container may be equal to the width of the third storage container. The width of the fourth storage container may be being 45 - 50% of the length of the third storage container. The fourth storage container may therefore also be referred to as a quarter-size storage container.

The second storage container may comprise a long side connection interface provided in a top of its long sides. The fourth storage container may comprise a long side connection interface provided in a top of its long sides. The long side connection interfaces of the second storage container may be functionally identical to the long side connection interfaces of the two fourth storage containers when one of the short sides of a first one of the two fourth storage containers is located adjacent to one of the short sides of a second one of the two fourth storage containers.

The first storage container may comprise a vertical guiding recess in each long side. The first storage container may comprise a vertical guiding recess in each short side.

The second storage container may comprise a vertical guiding recess in each long side. The vertical guiding recess in one of the long sides of the second storage container may be aligned with the vertical guiding recess in one of the long sides of the first storage container when the first storage container and the second storage container are stacked above each other in a stack.

The third storage container may comprise a vertical guiding recess in each long side. The vertical guiding recess in one of the long sides of the third storage container may be aligned with the vertical guiding recess in one of the short sides of the first storage container when the first storage container and the third storage container are stacked above each other in a stack.

These vertical guiding recesses may be located in the center of the respective sides of the storage containers. Hence, the vertical guiding recesses may be referred to as mid-side channel profiles.

The second storage container, the third storage container and the fourth storage container comprises corner profiles being similar to or identical to parts of the mid-side channel profile.

The first storage container comprises a center guide protruding up from a centre of the base, wherein the center guide comprises a through guiding aperture.

A first type of container handling vehicle may handle one first storage container by engaging the short side connection interface of the first storage container and may at another time handle one or two second storage containers by engaging the short side connection interface of one or two second storage containers. One advantage of such a type of container handling vehicle is that grippers will not protrude down into a storage compartment of first storage container nor into a storage compartment of the second storage container.

A second type of container handling vehicle may handle one first storage container by engaging long side connection interface of the first storage container and may at another time handle one or two third storage containers by engaging the short side connection interface of one or two third storage containers. Again, one advantage of such a type of container handling vehicle is that grippers will not protrude down into a storage compartment of the first storage container nor into a storage compartment of the third storage container.

A third type of container handling vehicle may handle one first storage container, and may at another time handle one or two second storage containers, or may at yet another time handle up to four fourth storage containers.

### BRIEF DESCRIPTION OF THE DRAWINGS

The following drawings are appended to facilitate the understanding of the invention. The drawings show embodiments of the invention, which will now be described by way of example only, where:
Fig. 1 is a perspective view of a framework structure of a prior art automated storage and retrieval system.
Fig. 2 is a perspective view of a prior art container handling vehicle having an internally arranged cavity for carrying storage containers therein.
Fig. 3 is a perspective view of a prior art container handling vehicle having a cantilever for carrying storage containers underneath.
Fig. 4 is a perspective view, seen from below, of a prior art container handling vehicle having an internally arranged cavity for carrying storage containers therein.
Fig. 5 is a perspective view of a first embodiment of a delivery vehicle.
Fig. 6 is a side view of a storage system with two framework structures, where the delivery vehicle is transporting storage containers between the framework structures and/or to an access station.
Fig. 7 is a perspective view of a set of storage containers with a first, second and third storage container.
Fig. 8 is a top view of the first, second and third storage container of fig. 5.
Fig. 9 is a top view of the first storage container and two second storage containers located side by side.
Fig. 10 is a top view of the first storage container and two third storage containers located side by side.
Fig. 11a is a top view of a further embodiment of a set of storage containers with a first, second, third and fourth storage container.
Fig. 11b is a top view of a third storage container together with two fourth storage containers.
Fig. 11c is a top view of a second storage container together with two fourth storage containers.
Fig. 12 is a perspective view of an alternative embodiment of the first storage container.
Fig. 13 is a rear perspective view of the vehicle of fig. 5.
Fig. 14a and 14b illustrates a schematic side view of a spring-biased vertical wall guide.
Fig. 15a and fig. 15b illustrates a schematic side view of a vertical wall guide with an actuator for moving the vertical wall guide.
Fig. 16 illustrates a frameworks structure with vertical wall guides adjacent to storage columns.
Fig. 18 illustrates a container handling vehicle for transporting the first and second storage containers.
Fig. 19 and Figs. 19a-d illustrates a container handling vehicle for transporting the first, second, third and fourth storage containers.

### DETAILED DESCRIPTION

The delivery vehicle of the present invention may, for example, be used with a framework structure 100 of the automated storage and retrieval system 1 constructed in a similar manner to the prior art framework structure 100 described above in connection with Fig. 1. That is, the framework structure 100 comprises a number of upright members 102, and comprises a first, upper rail system 108 extending in the X direction and Y direction.

The framework structure 100 further comprises storage compartments in the form of storage columns 105 provided between the members 102 wherein storage containers 106 are stackable in stacks 107 within the storage columns 105.

The framework structure 100 can be of any size. In particular it is understood that the framework structure can be considerably wider and/or longer and/or deeper than disclosed in Fig. 1. For example, the framework structure 100 may have a horizontal extent of more than 700×700 columns and a storage depth of more than twelve containers.

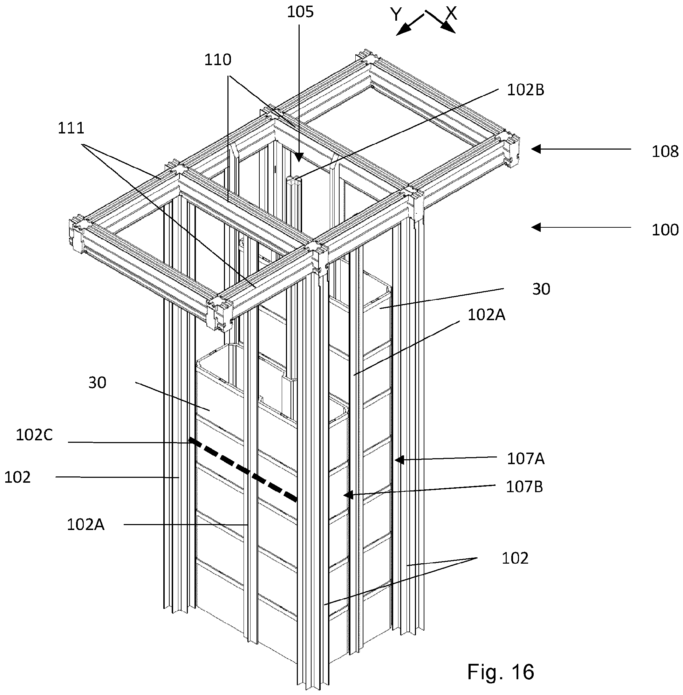

Referring to Fig. 16, where a part of the framework structure 100 is shown, an upper end of the upright members 102 is connected to the rail system 108 at intersections between a first set of parallel rails 110 arranged to guide movement of the container handling vehicles 201, 301, 401 in a first direction X across the top of the frame structure 100, and a second set of parallel rails 111 arranged perpendicular to the first set of rails 110 to guide movement of the container handling vehicles 201, 301, 401 in a second direction Y which is perpendicular to the first direction X.

In addition, the framework structure 100 here comprises vertical guides 102A located between the upright members 102. Hence, some vertical guides 102A are located under rails 110, while other vertical guides 102a are located under rails 111. A lower end of the vertical guides 102A are here secured to the floor on which the lower end of the upright members 102 are secured. Alternatively, the lower end of the vertical guides 102A may be supported by a crossbar 102C (dashed line in fig. 16) connected between two vertical posts 102.

The storage column 105 is here shown with two stacks 107A, 107B of storage containers. In the present embodiment, a set of storage containers having different sizes may be stacked within the storage column 105. This will be described further in detail below.

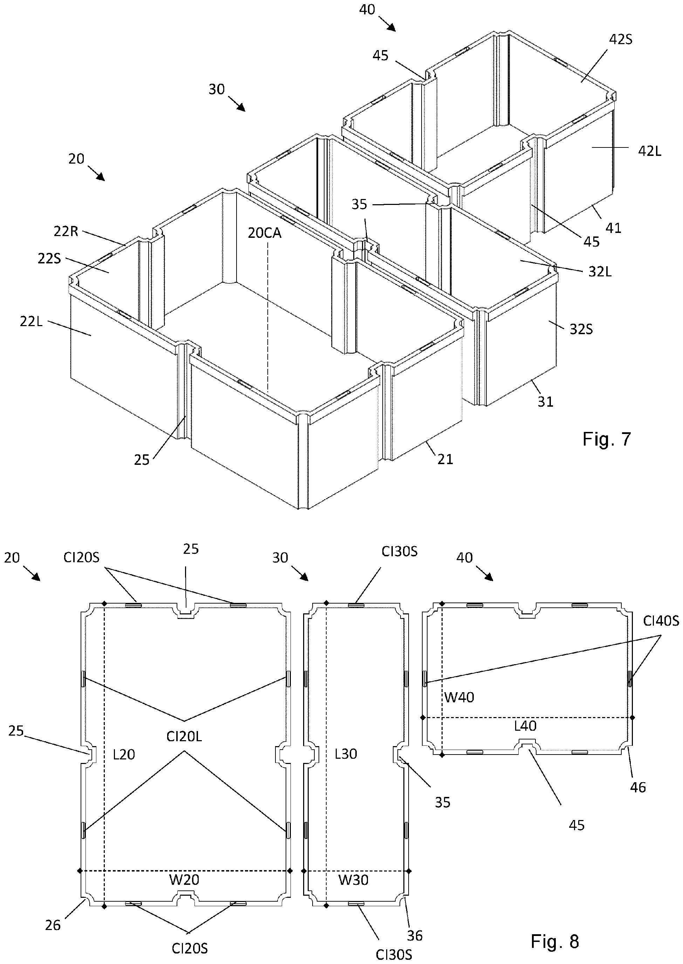

Fig. 7 and Fig. 8 show different storage containers. Here, a set of three different storage containers is shown. The storage containers are referred to as a first storage container 20, a second storage container 30 and a third storage container 40.

The first storage container 20 has a generally rectangular base 21, two long sides 22L and two short sides 22S protruding up from the rectangular base 21. The first storage container 20 has a storage compartment defined by the upwardly facing surface of the base and the inwardly facing surfaces of the long sides and the short sides. The storage container has a top opening defined by the periphery of the top of the short sides and the long sides. Items may be inserted into and retrieved from the storage compartment via this top opening. The top of the short sides and the long sides comprises a rim 22R extending in a direction parallel to the base 21 of the first storage container 20 and spaced away from a vertical center axis 22CA of the first storage container 20.

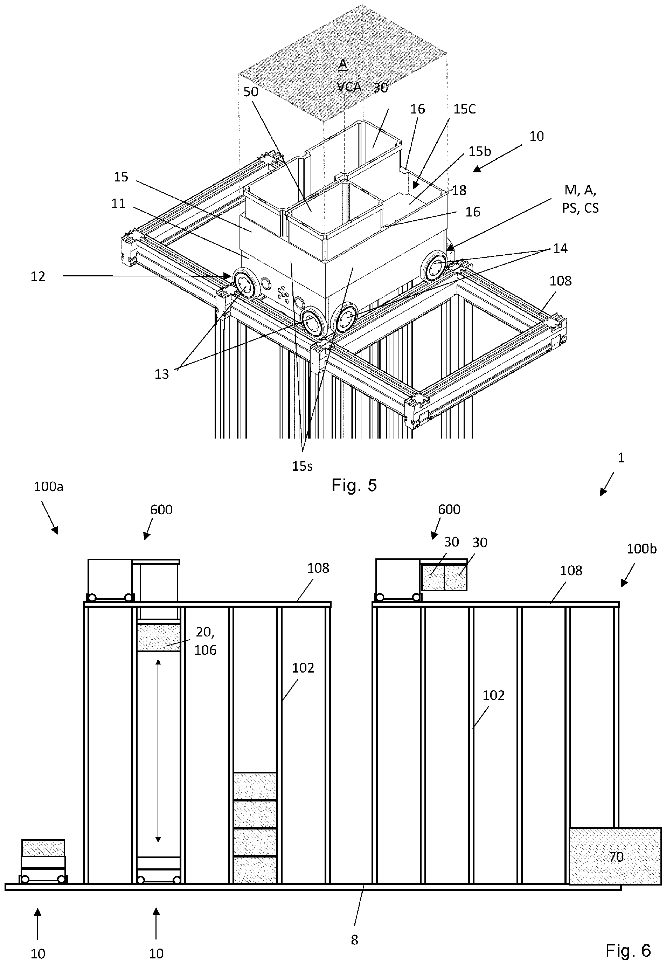

In a top of the long sides 22L, a long side connection interface CI20L is provided. In a top of the short sides 22S, a short side connection interface CI20S is provided. The short side connection interfaces CI20S and the long side connection interfaces CI20L comprises slots provided through this rim. The slots may have an elongated shape. In the example of Figs. 5 and 6, it is shown that each short side connection interface CI20S comprises two slots and each long side connection interface CI20L comprises two slots.

In fig. 8, it is shown that the long side 22L of the first storage container 20 has a length, referred to as a length L20 of the first storage container 20. The short side 22S of the first storage container 20 has a length, referred to as a width W20 of the first storage container 20.

The first storage container 20 further comprise a vertical guiding recess 25 in each long side 22L and in each short side 22S. When the first storage container 20 is moved up or down within the storage column 105, the vertical guiding recess 25 is engaged with the vertical guide members 102A, thereby ensuring that the storage container 20 is positioned correctly within the storage column 105. It should be noted that corners of the first storage containers 20 may engage the upright members 102 in order to ensure that the storage container 20 is positioned correctly within the storage column 105.

The second storage container 30 has a generally rectangular base 31, two long sides 32L and two short sides 32S protruding up from the rectangular base 31. Similar to the first storage container 20, also the second storage container 30 has a rim extending in a direction parallel to the base 31 spaced away from a vertical center axis of the second storage container 30.

In a top of the long sides 32L, a long side connection interface CI30L is provided. In a top of the short sides 32S, a short side connection interface CI30S is provided. Again, similar to the first container 20, the short side connection interfaces CI30S and the long side connection interfaces CI30L comprises elongated slots provided through its rim. In fig. 5 and 6, it is shown that each short side connection interface CI30S comprises one slot and each long side connection interface CI30L comprises two slots.

In fig. 8, it is shown that the long side 32L of the second storage container 30 has a length, referred to as a length L30 of the second storage container 30. The short side 32S of the second storage container 30 has a length, referred to as a width W30 of the second container 30.

The length L30 of the second storage container 30 is equal to the length L20 of the first storage container 20. The width W30 of the second storage container 30 is between 45 - 50% of the width W20 of the first storage container 20. Hence, if the first storage container 20 is referred to as a full-size storage container, then the second storage container 30 may be referred to as a half-size storage container.

Similar to the first storage container 20, the second storage container 30 comprises a vertical guiding recess 35 in each long side 32L. It should further be noted that vertical corners of the second storage container 30 have a shape resembling half of the vertical guiding recess 35, allowing at least some of the corners of the second container 30 to engage the vertical guide members 102A.

The third storage container 40 has a generally rectangular base 41, two long sides 42L and two short sides 42S protruding up from the rectangular base 41. Similar to the first storage container 20, also the third storage container 40 has a rim extending in a direction parallel to the base 41 spaced away from a vertical center axis of the third storage container 40.

In a top of the long sides 42L, a long side connection interface CI40L is provided. In a top of the short sides 42S, a short side connection interface CI40S is provided. Again, similar to the first container 20, the short side connection interfaces CI40S and the long side connection interfaces CI40L comprises elongated slots provided through its rim. In fig. 7 and 8, it is shown that each short side connection interface CI40S comprises one slot and each long side connection interface CI40L comprises two slots.

In fig. 8, which shows the containers in plan view, it is shown that the long side 42L of the third storage container 40 has a length, referred to as a length L40 of the third storage container 40. The short side 42S of the third storage container 40 has a length, referred to as a width W40 of the third container 40.

The length L40 of the third storage container 40 is equal to the width L20 of the first storage container 20. The width W40 of the third storage container 40 is between 45 - 50% of the length L20 the first storage container 20. Hence, if the first storage container 20 is referred to as a full-size storage container, then, the third storage container 40 may be referred to as a half-size storage container. Hence, there are two types of half-size storage containers.

As a consequence of the above, the width W40 is between 45 - 50% of the length L30, and the width W30 is between 45 - 50% of the length L40.

Similar to the first storage container 20, the third storage container 40 comprises a vertical guiding recess 45 in each long side 42L. It should further be noted that vertical corners of the third storage container 40 have a shape resembling half of the vertical guiding recess 45, allowing at least some of the corners of the third container 40 to engage the vertical guide members 102A.

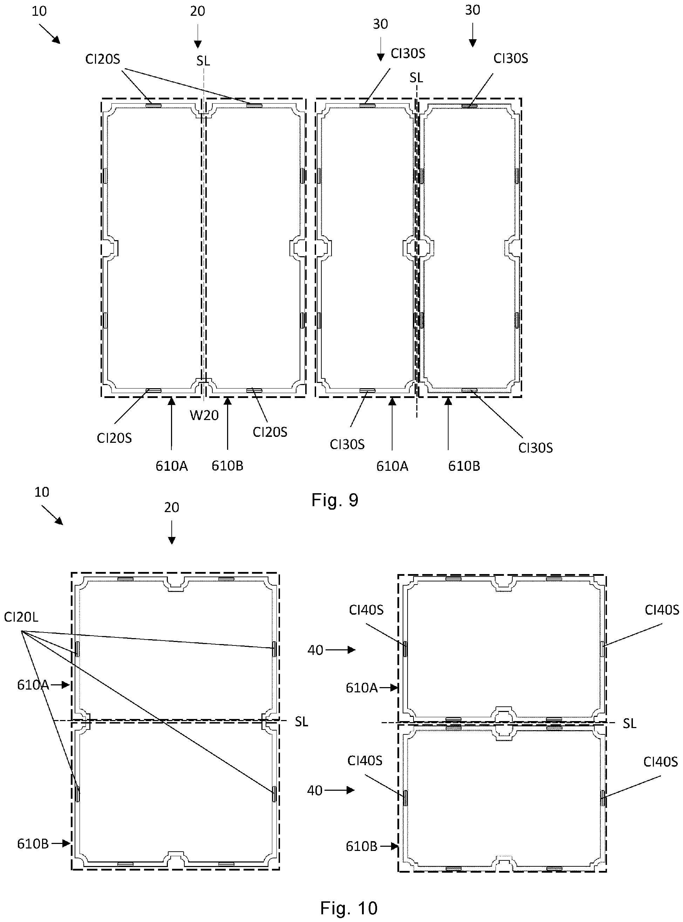

It is now referred to fig. 9. Here it is shown a first storage container 20 adjacent two second storage containers 30. The second storage containers 30 are arranged so that one of the long sides 32L of a first one of the two second storage containers 30 is located adjacent to one of the long sides 32L of a second one of the two second storage containers 30. The long sides 32L of the two second storage containers 30 are in parallel with each other. One of the short sides 32S of the first one of the two second storage containers 30 is aligned with one of the short sides 32S of the second one of the two storage containers 30, and the other one of the short sides 32S of the first one of the two second storage containers 30 is aligned with the other one of the short sides 32S of the second one of the two storage containers 30. When comparing the first storage container 20 with the two second storage containers 30 of fig. 7, it is apparent that the short side connection interfaces CI30S of the two second storage containers 30 together are functionally identical to the short side connection interface CI20S of the first storage container 20.

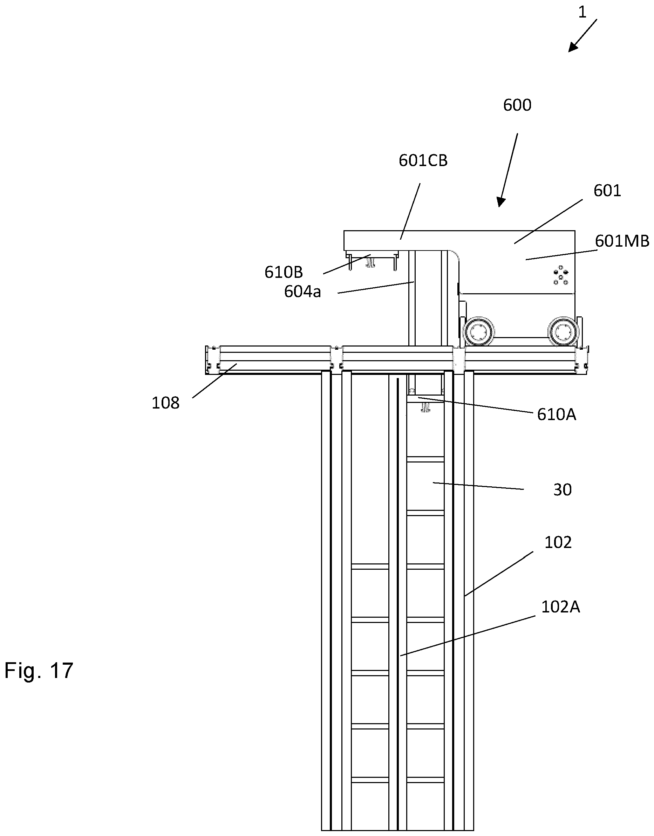

Hence, as will be described further in detail below, a container handling vehicle 600 (fig. 17) with two gripping devices 610A, 610B may connect to and disconnect from the short side connection interfaces CI30S of the two storage containers 30 in the same way as it may connect to and disconnect from the short side connection interface CI20S of the first storage container 20.

It is now referred to fig. 10. Here it is shown a first storage container 20 at a distance from two third storage containers 40. The third storage containers 40 are arranged so that one of the long sides 42L of a first one of the two third storage containers 40 is located adjacent to one of the long sides 42L of a second one of the two third storage containers 40. The long sides 42L of the two third storage containers 40 are in parallel with each other. One of the short sides 42S of the first one of the two third storage containers 40 is aligned with one of the short sides 42S of the second one of the two storage containers 40, and the other one of the short sides 42S of the first one of the two third storage containers 40 is aligned with the other one of the short sides 42S of the second one of the two storage containers 40. When comparing the first storage container 20 with the two third storage containers 40, it is apparent that the short side connection interfaces CI40S of the two third storage containers 40 together are functionally identical to the long side connection interface CI20L of the first storage container 20.

Hence, as will be described further in detail below, a container handling vehicle 600 similar to, but not identical to, the one shown in fig. 17, having two gripping devices, may connect to and disconnect from the short side connection interfaces CI40S of the two storage containers 40 in the same way as it may connect to and disconnect from the long side connection interface CI20L of the first storage container 20.

An example container handling vehicle with now be described with reference to fig. 17. The container handling vehicle 600 comprises a vehicle body 601 with a main body section 601MB and a cantilever body section 601CB protruding from a side of the main body section 601MB.

The container handling vehicle 600 comprises a first gripping device 610A, a second gripping device 610B, a first lifting device located within the cantilever body section 601CB for moving the first gripping device 610A vertically relative to the vehicle body 601; and a second lifting device located within the cantilever body section 601CB for moving the second gripping device 610B vertically relative to the vehicle body 601.

The container handling vehicle 600 may comprise a first set of wheels 602 for moving the container handling vehicle 600 in a first direction and a second set of wheels 603 for moving the container handling vehicle 600 in a second direction perpendicular to the first direction. The wheels are secured to the main body section 601MB. The cantilever body section 601CB may be located at a height above the wheels in order to carry storage containers while moving horizontally, i.e. without the storage containers obstructing or preventing movement of the container handling vehicle.

In the present example, the first gripping device 610A and the second gripping device 610B are configured to cooperatively engage a connection interface CI20S of the first storage container 20. This is referred to as a first mode of operation. In a second mode of operation, the first gripping device 610A is configured to engage the short side connection interface CI30S of one second storage container 30, and the second gripping device 610B is configured to engage the short side connection interface CI30S of another second storage container 30. It should be noted that in the second mode of operation, the first gripping device 610A and the second gripping device 610B are operated independently of each other. Similarly, the first lifting device and the second lifting device are operated independently of each other. Hence, they can lift one second storage container each, or only one of them can lift a storage container.

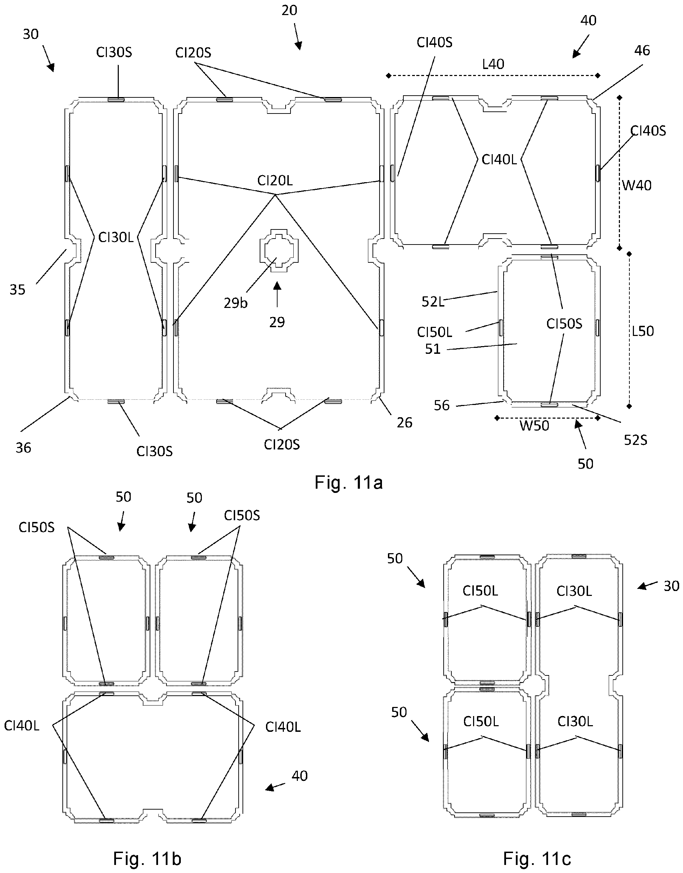

A second example set of storage containers will now be described with reference to fig. 11a. The set is similar to the set shown in fig. 9 and 10, and only differences will be described herein.

The second set of storage containers comprises a fourth storage container 50 in addition to the first, second and third storage containers. The fourth storage container 50 comprises a generally rectangular base 51, two long sides 52L and two short sides 52S protruding up from the rectangular base 51 and a short side connection interface CI50S provided in a top of its short sides 52S.

The fourth storage container 50 has a footprint area of 20 - 25% of the first storage container 20. The fourth storage container 50 has a footprint area of 45 - 50% of the second storage container 30. The fourth storage container 50 has a footprint area of 45 - 50% of the third storage container 40.

The long side 52L of the fourth storage container 50 may have a length, referred to as a length L50 of the fourth storage container 50. The short side 52S of the fourth storage container 50 may have a length, referred to as a width W50 of the fourth storage container 50.

The length L50 of the fourth storage container 50 may be equal to the width W40 of the third storage container 40. The width W50 of the fourth storage container 50 may be being 45 - 50% of the length L40 of the third storage container 40. The fourth storage container 50 may therefore be referred to as a quarter-size storage container.

It is now referred to fig. 11b. Here it is shown that the third storage container 40 comprises a long side connection interface CI40L provided in a top of its long sides 42L. The short side connection interfaces CI50S of two fourth storage containers 50 are functionally identical to the long side connection interface CI40L of the third storage container 40 when one of the long sides 52L of a first one of the two fourth storage containers 50 is located adjacent to one of the long sides 52L of a second one of the two fourth storage containers 50.

It is now referred to fig. 11c. Here, it is shown that the second storage container 30 comprises a long side connection interface CI30L provided in a top of its long sides 32L. The fourth storage container 50 comprises a long side connection interface CI50L provided in a top of its long sides 52L. The long side connection interfaces CI30L of the second storage container 30 is functionally identical to the long side connection interfaces CI50L of the two fourth storage containers 50 when one of the short sides 52S of a first one of the two fourth storage containers 50 is located adjacent to one of the short sides 52S of a second one of the two fourth storage containers 50.

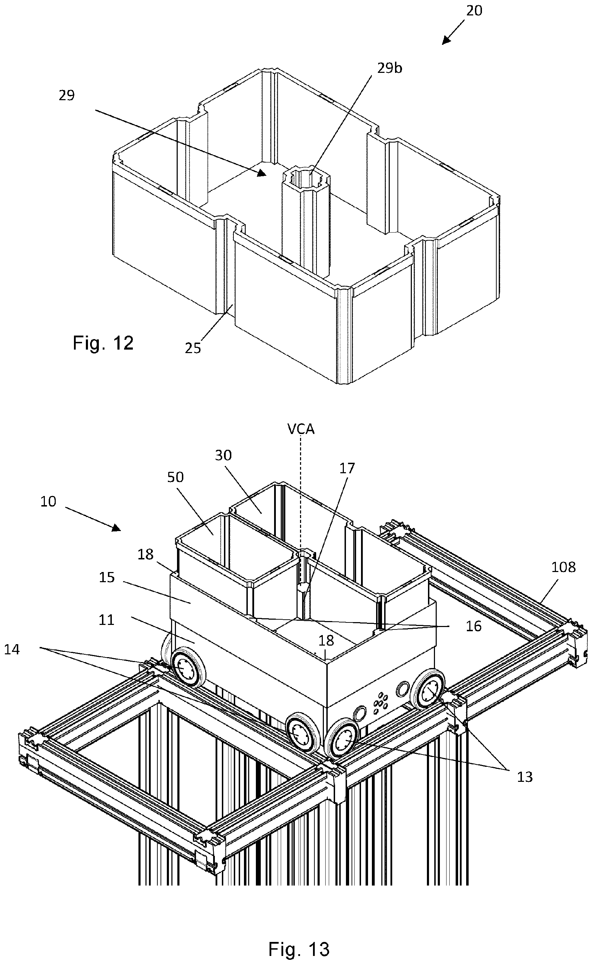

It is now referred to fig. 11a and fig. 12. In the second set of storage containers, the first storage container 20 comprises a center guide 29 protruding up from a centre of the base 21. The center guide 29 comprises a through guiding aperture 29b.

It is now referred to fig. 16 again. Here it is shown one storage column 105 of a framework structure 100 with upright members 102, guiding members 102A and the rail system 108. Here, the storage column 105 is defined by four upright members 102, one in each corner of the storage column, and four guiding members 102A, one guiding member between each two of the upright members 102.

In addition, the framework structure 100 comprises a vertical guide 102B located in the centre of each storage column 105. The vertical guide 102B is guiding first storage containers via its center guide 29. The vertical guide 102B is guiding second storage containers 30 via one of its vertical guiding recesses 35 (the other vertical guiding recess being guided by one of the vertical guides 102A). The vertical guide 102B is guiding third storage containers 40 via one of its vertical guiding recesses 45, similar to the second storage containers 30. The vertical guide 102B is guiding fourth storage containers 50 via one of its corners or corner profiles (the other three corners being guided by the upright members 102 and the vertical guides 102A).

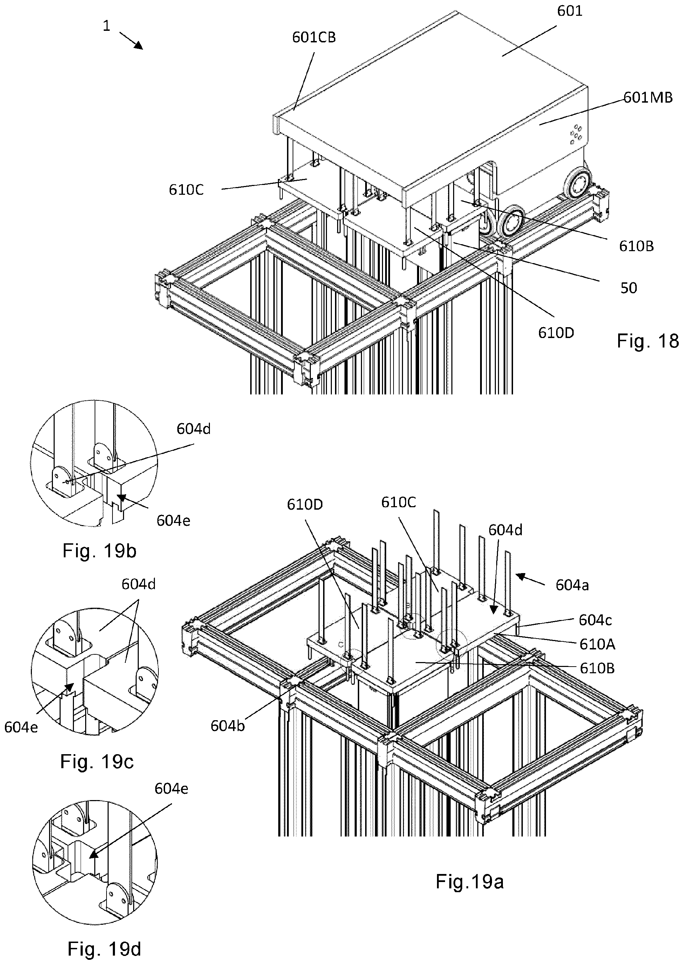

A container handling vehicle for the second set of storage containers will now be described with reference to figs. 18 and 19a-19d. Here it is shown a container handling vehicle 600 of a similar type as the one described above with reference to fig. 17. In fig. 19 and 19a-19d, the container handling vehicle 600 has four gripping devices 610A, 610B, 610C, 610D and four lifting devices (located within the cantilever structure 601CB), one lifting device for each gripping device.

The first, second, third and fourth gripping devices 610A, 610B, 610C, 610D are configured to individually engage the short side connection interface CI50S of one of the fourth storage containers 50. Hence, the vehicle may engage one, two, three or four fourth storage containers 50 individually or simultaneously.

Similar to the above vehicles, all four gripping devices and lifting devices may cooperatively engage one first storage container 20 via its short side connection interface CI20S. As shown in fig. 18 and 19a, the second gripping device 610B is lifting one fourth storage container 50, while the other gripping devices are not engaging any storage containers.

The first and third gripping devices 610A, 610C are configured to cooperatively engage the connection interface CI40B of a first one of the third storage containers 40. Similarly, the second and fourth gripping devices 610B, 610D are configured to cooperatively engage the long side connection interface CI40L of a second one of the third storage containers 40.

It is now referred to fig. 19b, 19c, 19d. Here it is shown that the gripper devices have recesses 604e shaped according to the vertical guides 102A and the central vertical guide 102B to allow the gripper devices to be lowered into the storage compartment.

The above described examples of sets of containers, framework structures and container handling vehicles can be used in different automated storage and retrieval systems. Some systems may use only two types of storage containers, for example the first and the second storage containers, or the first and the third storage containers. In this case, one type of container handling vehicle is sufficient for lifting both of these storage containers. Other systems may use the first, second and third storage containers. In this case, two types of container handling vehicles are necessary (one for the first and second container, the other one for the first and third container).

In yet a further example, the first, second, third and fourth storage containers are used. It should be noted that all containers may be stacked above each other in a stack, under the assumption that each previous layer is not partially empty.

A delivery vehicle will now be described with reference to fig. 5 and to fig. 13, where a delivery vehicle 10 is shown. The delivery vehicle 10 comprises a vehicle body 11, a first set of wheels 13 for moving the delivery vehicle 10 in a first direction and a second set of wheels 14 for moving the delivery vehicle 10 in a second direction perpendicular to the first direction.

The first set of wheels and/or the second set of wheels may be elevated vertically relative to the vehicle body 11 in order to provide that only one set of wheels are in physical contact with the surface below the delivery vehicle. As shown in fig. 5, the wheels 13, 14 are located around a lower portion of the vehicle body 11. The wheels 13, 14 are designed for running on a rail system.

The delivery vehicle 10 further comprises a propulsion system 12 located at least partially within the vehicle body 11. The propulsion system 12 comprises a motor M for rotating at least some of the wheels. The propulsion system 12 comprise an actuator A for elevating the first set of wheels and/or the second set of wheels. The propulsion system 12 comprises a power supply PS in the form of a rechargeable battery or capacitor, for powering the motor M and/or the actuator A. In addition, the propulsion system 12 comprise a control system CS for controlling the motor and/or the actuator. The control system CS is typically provided in communication with a control system 500 of the automated storage and retrieval system 1.

The delivery vehicle 10 further comprises a container carrier 15 having four side walls 15s extending vertically above the vehicle body 11. The four side walls 15s are together defining a container compartment 15C configured to receive one of, or several of, the above storage containers 20, 30, 40, 50 of the second set of storage containers. The container compartment 15C is also defined by a base 15b, which in the present embodiment is a part of the vehicle body 11. A centre of the container compartment is indicated as a vertical center axis VCA in fig. 5 and fig. 13.

The container carrier 15 further comprises vertical wall guides 16 protruding inwardly into the container compartment 15C towards the vertical center axis VCA. There are four vertical wall guides 16, one for each side wall 15s, and each vertical wall guide 16 is located centrally on its side wall 15s. In the present embodiment, the wall guides 16 are provided as part of the respective side wall 15s.

The container carrier 15 further comprises a vertical center post 17 extending vertically up into the container compartment 15C. The vertical center post 17 is aligned with the central vertical axis VCA of the container compartment 15C. The vertical center post 17 has a cross-sectional shape in the form of a cross.

The vertical wall guides 16 are configured to engage the four vertical side recesses 25 of the first storage container 20, while the vertical center post 17 is configured to engage the guiding aperture 29b of the first storage container 20.

The vertical wall guides 16 are configured to engage one of the two vertical side recesses 35 and two of the vertical corner recesses 36 of the second storage container 30, while the vertical center post 17 is engaging the other one of the two vertical side recesses 35 of the second storage container 30.

Similarly, the vertical wall guides 16 are configured to engage one of the two vertical side recesses 45 and two of the vertical corner recesses 46 of the third storage container 40, while the vertical center post 17 is engaging the other one of the two vertical side recesses 45 of the third storage container 40.

The vertical wall guides 16 are configured to engage three of the vertical corner recesses 56 of the fourth storage container 50, while the vertical center post 17 is engaging the fourth one of the four vertical corner recesses 56 of the fourth storage container 50.

The above engagement between the vertical wall guides 16, the vertical center post 17 and the vertical corner recess 36, 46, 56 of the storage container 30, 40, 50 and/or the engagement between the vertical wall guides 16, the vertical center post 17 and the vertical side recess 25, 35, 45 of the storage container 20, 30, 40 is providing guiding of the storage containers during their vertical movement into or out from the container compartment 15C. The above engagement is also preventing horizontal displacement of the storage containers within the container compartment 15C during movement of the delivery vehicle 10.

The container carrier 15 further comprises vertical corner recesses 18 protruding inwardly into the container compartment 15C. The vertical corner recesses 18 are located in the corners of the container compartment 15C. Each vertical corner recess 18 is configured to engage a vertical corner recess 26, 36, 46, 56 of the respective storage containers 20, 30, 40, 50.

In fig. 5, it is shown that the container compartment 15C has a horizontal cross section area A. This area A corresponds to the footprint of the first storage container 20.

It should be noted that the vertical post 17 may not be present in the delivery vehicle 10. Without the vertical post 17, the delivery vehicle 10 is well suited to receive one first storage container 20, or up to two second storage containers 30, or up to two third storage containers 40 (i.e. the first set of storage containers described above).

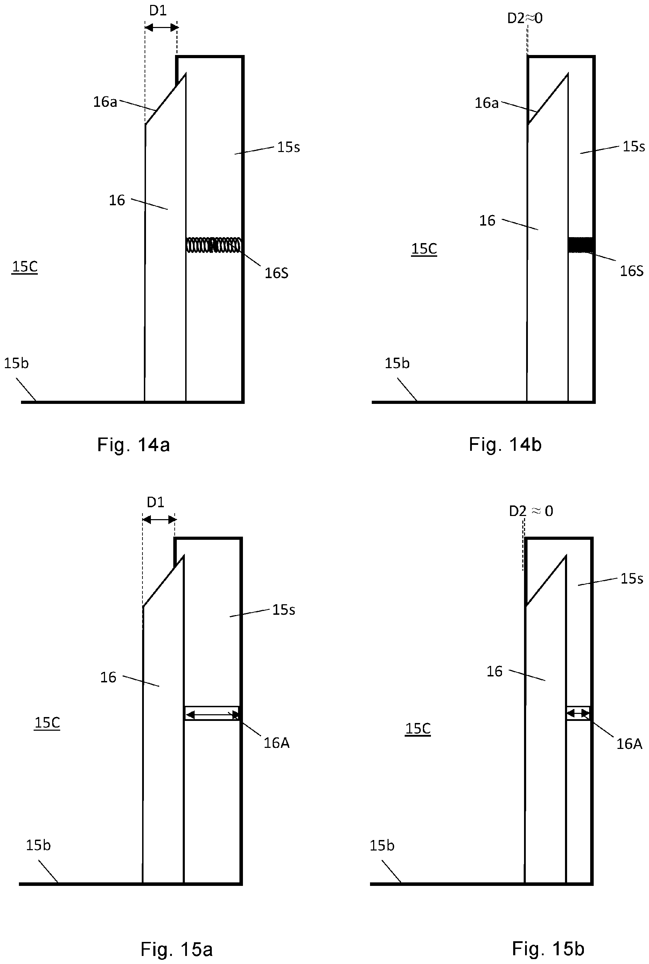

In yet another embodiment, the vertical wall guides 16 are connected to the side walls 15s and are movable between two different states referred to as a protruding state and retracted state. It is now referred to fig. 14a and fig. 14b. In fig. 14a, the protruding state is shown. Here, the vertical wall guide 16 is shown to be connected to the side wall 15s via a spring 16S. The spring 16S is biasing the vertical wall guide 16 towards the protruding state. Here, the vertical wall guide 16 is protruding inwardly into the container compartment 15C at a first distance D1.

The wall guide 16 comprises an upper inclining surface 16a. If a storage container without recesses 25, 35, 45 are lowered into the container compartment 15C, the vertical wall guide 16 is forced into or is wedged to its retracted state shown in fig. 14b. Here, the wall guide 16 is displaced inwardly into the container compartment 15C at a second distance D2. In fig. 14b, the second distance D2 is shown to be 0 mm., i.e. the vertical wall guide 16 is aligned with or is flush with the inwardly facing surface of the side wall 15s.

It is now referred to fig. 15a and 15b. Here, the vertical wall guide 16 is connected to the side wall 15s by means of an actuator 16A. The actuator 16A is configured to move the vertical wall guides 16 between the retracted state and the protruding state. The actuator 16A may be controlled by a control system CS of the delivery vehicle 10. Here, the delivery vehicle 10 is configured to receive information about the type of storage container before the storage container is lowered into the container compartment 15C and is controlling the state of the wall guides 16 (protruding state of fig. 15a or retracted state of fig. 15b) depending on whether the storage container has vertical guiding recesses or not.

It is now referred to fig. 6. Here it is shown an automated storage and retrieval system 1 comprising a first framework structure 100a and a second framework structure 100b. Each of these framework structures 100a, 100b has a rail system 108 on top of their upright members 102 and (even if it is not shown in fig. 6) they further comprise the vertical guides 102A and the vertical center post 102B. The container handling vehicle 600 of the type shown in fig. 19 is shown operating on the rail system 108 of the first framework structure 100a, and another one of the container handling vehicle 600 of the type shown in fig. 19 is operating on the rail system 108 of the second framework structure 100b. Hence, the storage containers 20, 30, 40, 50 may all be stored in storage compartments within the first and second framework structures. It is also possible to provide some of the storage columns of for example the first framework structure 100a without the vertical guides 102a and without the vertical center post 102B. Hence, also prior art storage containers 106 may be stored here.

On the floor below the rail systems 108, a further rail system 8 is shown. Two delivery vehicles 10 are operating on this rail system 8. One purpose is to move storage containers 20, 30, 40, 50 (and possibly also storage containers 106) between the first framework structure 100a and the second framework structure 100b. This is done by lowering one or more storage containers by means of the container handling vehicle 600 down through one of the storage columns 105 of the first framework structure 100a to the delivery vehicle 10, and then moving the delivery vehicle 10 to a position below one of the storage columns 105 of the second framework structure 100b, where the container handling vehicle 600 of the second framework structure 100b is elevating the storage containers from the delivery vehicle 10. It is also possible to use the delivery vehicle to move the storage containers between the storage columns 105 of the first or second framework structures 100a, 100b to an access station 70 of the automated storage and retrieval system 1.

Further modification of the framework structures 100a, 100b can also be provided. Lower sections of at least some of the upright members 102 may have a cross sectional area being smaller than the cross sectional area of upper sections of the upright members 102. The lower rails 8 may be located between such lower sections, thereby allowing the delivery vehicle 10 to move between such upright members. In such a case, the lower end of the vertical guides 102A will be secured to the cross member 102C as shown in fig. 16, allowing a loaded delivery vehicle 10 to pass below the cross member 102C.

In the preceding description, various aspects have been described with reference to the illustrative embodiment. For purposes of explanation, specific numbers, systems and configurations were set forth in order to provide a thorough understanding of the system and its workings. However, this description is not intended to be construed in a limiting sense. Various modifications and variations of the illustrative embodiment, as well as other embodiments of the system, which are apparent to persons skilled in the art to which the disclosed subject matter pertains, are deemed to lie within the scope of the present invention.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

### LIST OF REFERENCE NUMBERS

- 1: automated storage and retrieval system

- 10: delivery vehicle
- 11: vehicle body
- 12: propulsion system
- 13: first set of wheels
- 14: second set of wheels
- 15: container carrier
- 15C: container compartment
- 15b: base of container carrier
- 15s: side walls of container carrier
- 16: vertical wall guides
- 16A: actuator
- 16S: spring
- 16a: upper inclining surface
- 17: vertical center post
- 18: vertical corner guide

- 20: first storage container
- 21: base of first storage container
- 22: sides of first storage container
- 25: vertical guiding recess of first storage container
- 26: vertical corner recess of first storage container
- 29: center guide of first storage container
- 29b: guiding aperture

- 30: second storage container
- 31: base of second storage container
- 32: sides of second storage container
- 35: vertical guiding recess of second storage container
- 36: vertical corner recess of second storage container

- 40: third storage container
- 41: base of third storage container
- 42: sides of third storage container
- 45: vertical guiding recess of third storage container
- 46: vertical corner recess of third storage container

- 50: fourth storage container
- 51: base of fourth storage container
- 52: sides of fourth storage container
- 56: vertical corner recess of fourth storage container

- 100: Framework structure
- 102: Upright members of framework structure
- 102A: vertical guide
- 102B: vertical center guide
- 104: Storage grid
- 105: Storage column
- 106: Storage container
- 106': Particular position of storage container
- 107: Stack
- 107a: separate stacks
- 107b: separate stacks
- 108: Rail system
- 110: Parallel rails in first direction (X)
- 112: Access opening
- 119: First port column
- 120: Second port column
- 201: Prior art container handling vehicle
- 201a: Vehicle body of the container handling vehicle 201
- 201b: Drive means/wheel arrangement/first set of wheels in first direction (X)
- 201c: Drive means/wheel arrangement/second set of wheels in second direction (Y)
- 301: Prior art cantilever container handling vehicle
- 301a: Vehicle body of the container handling vehicle 301
- 301b: Drive means/first set of wheels in first direction (X)
- 301c: Drive means/second set of wheels in second direction (Y)
- 304: Gripping device
- 401: Prior art container handling vehicle
- 401a: Vehicle body of the container handling vehicle 401
- 401b: Drive means/first set of wheels in first direction (X)
- 401c: Drive means/second set of wheels in second direction (Y)
- 404: Gripping device
- 404a: Lifting band
- 404b: Gripper
- 404c: Guide pin
- 404d: Lifting frame
- 500: Control system

- 600: container handling vehicle
- 601: vehicle body
- 601A: first body section
- 601B: second body section
- 601C: third body section
- 601CB: cantilever body section
- 601MB: main body section
- 602: wheels
- 603: wheels
- 603C: third body section
- 604a: Lifting band
- 604b: Gripper
- 604c: Guide pin
- 604d: Lifting frame
- 608: rotation device
- 610A: first gripping device
- 610B: second gripping device
- 610C: third gripping device
- 610D: fourth gripping device
- 620A: first lifting device
- 620B: second lifting device
- 620C: third lifting device
- 620D: fourth lifting device

- CI20L: long side connection interface
- CI20S: short side connection interface
- CI30L: long side connection interface
- CI30S: short side connection interface
- CI40L: long side connection interface
- CI40S: short side connection interface
- CI50S: short side connection interface

- L20: length/length of long side
- L30: length/length of long side
- L40: length/length of long side
- L50: length/length of long side
- W20: width/length of short side
- W30: width/length of short side
- W40: width/length of short side
- W50: width/length of short side
- X: First direction
- Y: Second direction
- Z: Third direction

## Claims

1. A delivery vehicle (10) for transporting one or more storage containers (20, 30, 40, 50) in an automated storage and retrieval system (1), wherein the delivery vehicle (10) comprises:
- a vehicle body (11);
- wheels (13, 14) connected to the vehicle body (11) for running on a rail system;
- a propulsion system (12) arranged to rotate the wheels (13, 14);
- a container carrier (15) providing a container compartment (15C) configured to receive the storage container (20, 30, 40, 50); wherein the container carrier (15) comprises one or more vertical wall guides configured to engage the one or more storage containers (30, 40, 50).

2. A delivery vehicle according to claim 1, wherein the one or more vertical wall guides protrude inwardly into the container compartment.

3. A delivery vehicle according to claim 1 or 2, wherein the one or more vertical wall guides are configured to engage a vertical corner recess of the one or more storage containers.

4. A delivery vehicle according to any of the preceding claims, wherein the one or more vertical wall guides are configured to engage a vertical side recess of the one or more storage containers.

5. The delivery vehicle (10) according to any preceding claim, wherein the container carrier (15) comprises:
- four side walls (15s) extending vertically above the vehicle body (11); wherein the one or more vertical wall guides (16) are provided as part of, or are connected to, the side walls (15s).

6. The delivery vehicle (10) according to claim 5, wherein the container carrier (15) comprises four vertical wall guides (16), one for each side wall (15s).

7. The delivery vehicle (10) according to any one of the above claims, wherein the container carrier (15) comprises a vertical center post (17) extending vertically up into the container compartment (15C).

8. The delivery vehicle (10) according to any one of the above claims, wherein the container compartment (15C) is configured to receive storage containers (20, 30, 40, 50) of different sizes.

9. The delivery vehicle (10) according to any one of the above claims, wherein the vertical wall guides (16) are biased into a protruding state, in which the vertical wall guides (16) are protruding inwardly into the container compartment (15C) at a first distance (D1) and a retracted state, in which the vertical wall guides (16) are displaced inwardly into the container compartment (15C) at a second distance (D2) shorter than the first distance (D1).

10. The delivery vehicle (10) according to any one of the above claims, wherein the container carrier (15) comprises vertical corner recesses (18) protruding inwardly into the container compartment (15C); wherein each vertical corner recess (18) is configured to engage a vertical corner recess (26, 36, 46, 56) of the storage container (20, 30, 40, 50).

11. The delivery vehicle (10) according to any one of the above claims, wherein the container compartment (15C) is configured to receive one single first storage container (20) having a footprint corresponding to the horizontal cross section area (A) of the container compartment (15C).

12. The delivery vehicle (10) according to claim 11, wherein the container compartment (15C) is configured to receive up to two second storage containers (30) or up to two third storage containers (40), each second storage container (30) and each third storage container (40) having a footprint being 45 - 50% of the horizontal cross section area (A) of the container compartment (15C).

13. The delivery vehicle (10) according to claim 10, wherein the container compartment (15C) is configured to receive up to four fourth storage containers (50) each having a footprint being 20 - 25% of the horizontal cross section area (A) of the container compartment (15C).

14. An automated storage and retrieval system (1) comprising a framework structure (100), wherein the framework structure (100) comprises:
- upright members (102; 102A);
- a storage volume comprising storage columns (105) provided between the upright members (102; 102A); and
- a rail system (8, 108),
wherein the automated storage and retrieval system (1) comprises a delivery vehicle (10) according to any one of the above claims arranged to operate on the rail system (8, 108), and
wherein the automated storage and retrieval system (1) comprises storage containers (20, 30, 40, 50) arranged to be stackable in stacks (107) within the storage columns (105) and arranged to be received within the container compartment (15C) of the delivery vehicle (10).

15. The automated storage and retrieval system (1) according to claim 14, wherein the automated storage and retrieval system (1) comprises a container handling vehicle (600) configured to move storage containers (20, 30, 40, 50) between the storage columns (105) and the container compartment (15C) of the delivery vehicle (10).
